# EUROPEAN PATENT APPLICATION

(11) **EP 4 708 505 A1**
(43) Date of publication of application: **11.03.2026**
(21) Application number: 24894524.8
(22) Date of filing: 15.11.2024
(51) Int. Cl.: H01M 50/242, H01M 50/262, H01M 50/289, H01M 50/271, H01M 50/204

(54) **BATTERY PACK**

(30) Priority: 20.11.2023 KR 20230160100
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR); LEE, Hyoung Suk, Daejeon 34122 (KR); KIM, Min Gu, Daejeon 34122 (KR)
(74) Representative: Plasseraud IP
(86) International application number: PCT/KR2024/018050
(87) International publication number: WO 2025/110631

(57) **Abstract**

A battery pack according to embodiments of the present disclosure is provided. The battery pack includes a pack housing including a base plate and sidewalls; first and second cross-beams disposed on the pack housing, and spaced apart in a first direction parallel to a mounting surface of the base plate and extending in a second direction parallel to the mounting surface of the base plate; a battery cell assembly interposed between the first and second cross-beams; a lead coupled to the sidewalls and covering the battery cell assembly; and a reinforcing bracket coupled to the lead and extending along the first direction.

## Description

### [Technical Field]

This application is based on and claims priority from Korean Patent Application No. 10-2023-0160100, filed on November 20, 2023, with the Korean Intellectual Property Office, the disclosure of which is incorporated herein in its entirety by reference.

### [Background Art]

Secondary batteries, unlike primary batteries, may be charged and discharged multiple times. Secondary batteries are being widely used as energy sources for various wireless devices such as handsets, laptops, and wireless vacuum cleaners. Recently, due to improvements in energy density and economies of scale, the manufacturing cost per unit capacity of secondary batteries has been remarkably reduced. Further, as a cruising range of battery electric vehicles (BEVs) has increased to the same level as that of the combustion engine vehicles, the main use of secondary batteries is shifting from mobile devices to mobility such as electric vehicles.

The technology development of secondary batteries for mobility is trending toward improving energy density and safety. Here, the energy density of the secondary battery refers to a value obtained by dividing the maximum electrical energy that the secondary battery may store by a weight of the secondary battery. Since the high energy density of the secondary battery is directly related to the driving efficiency of mobility and the cruising range, various studies are being conducted to improve the energy density of secondary batteries.

### [Disclosure]

### [Technical Problem]

An aspect of the present disclosure provides a battery pack with improved safety

### [Technical Solution]

According to an embodiment of the present disclosure, a battery pack is provided. The battery pack includes a pack housing including a base plate and sidewalls; first and second cross-beams disposed on the pack housing, and spaced apart in a first direction parallel to a mounting surface of the base plate and extending in a second direction parallel to the mounting surface of the base plate; a battery cell assembly interposed between the first and second cross-beams; a lead coupled to the sidewalls and covering the battery cell assembly; and a reinforcing bracket coupled to the lead and extending along the first direction.

The reinforcing bracket may be coupled to the lead by a spot welding.

The reinforcing bracket may be coupled to the first and second cross-beams.

The reinforcing bracket may have a flat plate shape.

The reinforcing bracket may include a corrugated structure.

The lead may include a first base and a first raised portion that is farther from the base plate than the first base.

The reinforcing bracket may include a second base and second raised portions that are farther from the base plate than the second base.

The second raised portions may overlap with the first raised portion in a third direction perpendicular to the mounting surface of the base plate.

Two or more of the second raised portions may overlap with one of the second raised portions in the third direction.

The second raised portions may be welded to the first raised portion.

The second base may be welded to the first base.

The reinforcing bracket may be welded to the first base of the lead and be spaced apart from the first raised portion.

The lead may include a corrugated structure that overlaps with the reinforcing bracket.

According to an embodiment of the present disclosure, a battery pack is provided. The battery pack includes a pack housing including a base plate and sidewalls; a battery cell assembly disposed on the pack housing and including a plurality of battery cells, first and second cross-beams being spaced apart in a first direction with the plurality of battery cells interposed therebetween; a lead coupled to the sidewalls; and a reinforcing bracket extending in the first direction and welded to the lead.

The reinforcing bracket may be coupled to the first and second cross-beams.

### [Advantageous Effects]

A battery pack according to the embodiments of the present disclosure may include a bracket welded to a lead. As a result, it is possible to prevent the lead from being damaged by vibration of a battery pack and swelling of battery cells therein.

The effects according to the various embodiments of the present disclosure are not limited to the effects mentioned above, and other effects not mentioned will be clearly understood by those skilled in the art from the description hereinbelow. Unintended effects of implementing the various embodiments of the present disclosure may also be derived by those of ordinary skill in the art from the various embodiments of the present disclosure.

### [Brief Description of the Drawings]

FIG. 1 is a plan view of a battery pack according to an embodiment of the present disclosure.
FIG. 2 is a cross-sectional view taken along the cutting line 1I-1I' of FIG. 1.
FIG. 3 is a cross-sectional view of a lead and a reinforcing bracket.
FIG. 4 is a cross-sectional view illustrating a battery cell assembly according to another embodiment of the present disclosure.
FIG. 5 is a cross-sectional view of a lead and a reinforcing bracket.
FIG. 6 is a plan view of a battery pack according to yet another embodiment of the present disclosure.

### [Best Mode]

Hereinafter, embodiments of the present disclosure will be described with reference to the attached drawings. The terms and words used in the specification and claims should not be construed as being limited to their ordinary or dictionary meanings, but should be construed as meanings and concepts consistent with the technical idea of the present disclosure based on a principle that an inventor may appropriately define the concepts of terms in order to explain his or her invention in the best possible manner.

The embodiments in the specification and configurations illustrated in the drawings are merely provided as an example of the present disclosure, and do not represent all the technical ideas of the present disclosure. Therefore, it should be understood that there may be various equivalents and modifications that could replace them at the time of filing this application.

Also, in the description of the present disclosure, when it is deemed that explanation of related well-known constructions or functions may obscure the essence of the invention, their detailed description is omitted.

Since the embodiments disclosed herein are provided for explanation of the present disclosure, the shape, size, and the like, of the components may be exaggerated, omitted or simplified in the drawings for better understanding. Thus, the size and ratio of the components in the drawings do not entirely reflect the actual size and ratio.

### (First Embodiment)

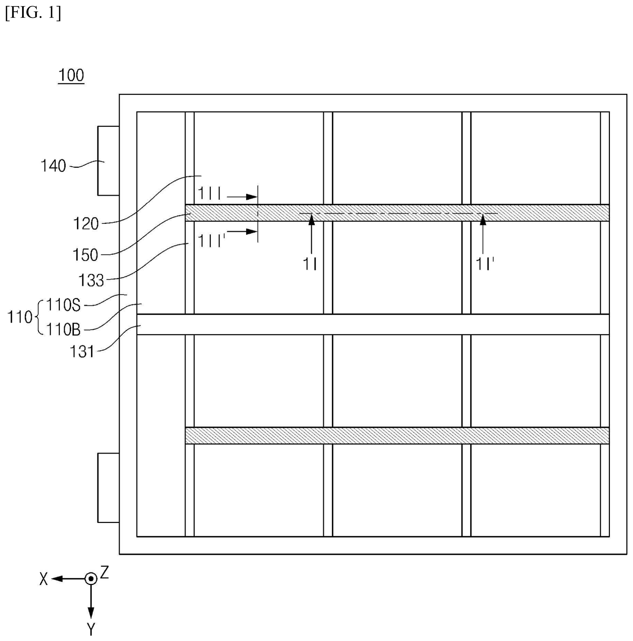

FIG. 1 is a plan view of a battery pack 100 according to an embodiment of the present disclosure. In FIG. 1, an illustration of a lead 160 is omitted for a better understanding of a positional relationship between the elements of the battery pack 100.

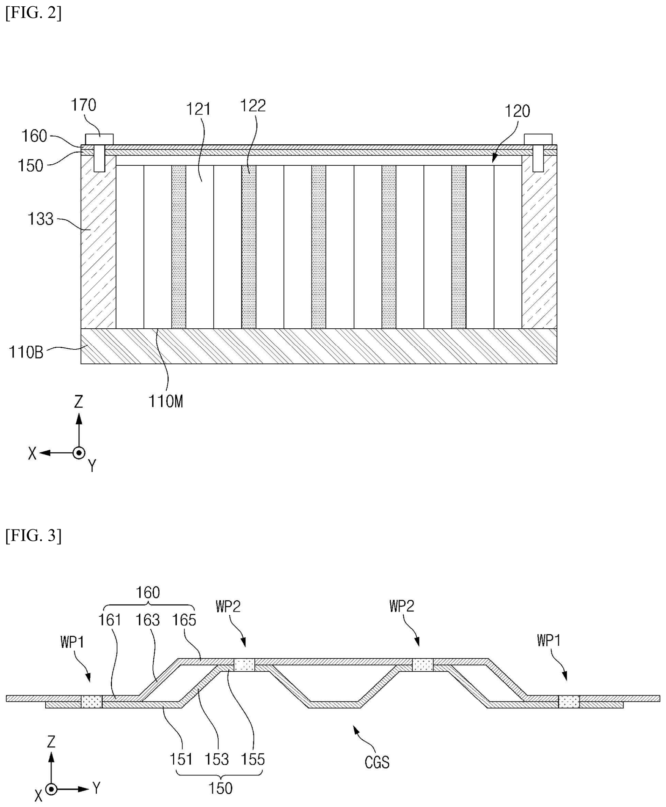

FIG. 2 is a cross-sectional view taken along the cutting line 1I-1I' of FIG. 1.

FIG. 3 is a cross-sectional view of the lead 160 and a reinforcing bracket 150. More specifically, FIG. 3 illustrates a portion corresponding to the cutting line 1II-1II' of FIG. 1.

Referring to FIGS. 1 to 3, the battery pack 100 may include a pack housing 110, a plurality of battery cell assemblies 120, a center beam 131, cross-beams 133, exhaust units 140, reinforcing brackets 150, the lead 160, and fixing units 170. The battery pack 100 is a final form of a battery system to be mounted on a mobility device.

The pack housing 110 may include a base plate 110B and sidewalls 110S. Here, the two directions substantially parallel to a mounting surface 110M of the base plate 110B are defined as the X-direction and the Y-direction, and a direction substantially perpendicular to the mounting surface 110M of the base plate 110B is defined as a Z-direction. The X-direction, the Y-direction, and the Z-direction may be substantially perpendicular to each other.

The base plate 110B may have a flat plate shape. The sidewalls 110S may be substantially perpendicular to the base plate 110B. The sidewalls 110S may be adjacent to the edge portions of the base plate 110B. The sidewalls 110S may be coupled to the edge portions of the base plate 110B.

The base plate 110B and each of the sidewalls 110S may be provided by an extrusion process. The base plate 110B may include a plurality of plates coupled by a friction stir welding.

The plurality of battery cell assemblies 120 may be on the mounting surface 110M of the base plate 110B of the pack housing 110. The plurality of battery cell assemblies 120 may be may be arranged in the X-direction and the Y-direction. In this example, three battery cell assemblies 120 are arranged in the X-direction and two battery cell assemblies 120 are arranged in the Y-direction, so that the plurality of battery cell assemblies 120 form a matrix of two rows and three columns. However, the example is provided only for illustrative purposes and does not limit the technical idea of the present disclosure in any sense.

The base plate 110B may support the plurality of battery cell assemblies 120. The sidewalls 110S may horizontally surround the plurality of battery cell assemblies 120.

Hereinafter, the technical idea of the present disclosure will be described with reference to an embodiment in which the battery pack 100 is of a module-less type and each of the plurality of battery cell assemblies 120 does not include a module frame. However, it is only a non-limiting example and does not limit the technical idea of the present disclosure in any sense. A person having ordinary skill in the art will readily understand the plurality of battery cell assemblies 120 including a module frame, and a module-type battery pack including the same, based on the description provided herein.

Each of the plurality of battery cell assemblies 120 may include a plurality of battery cells 121 and separators 122. Each of the plurality of battery cells 121 may include an electrode assembly, an electrolyte, and a case.

Each of the plurality of battery cells 121 may be one of a cylindrical battery cell, a prismatic battery cell, and a pouch-type battery cell. The electrode assembly of the cylindrical battery cell is embedded in a cylindrical metal can. The electrode assembly of the prismatic battery cell is embedded in a prismatic metal can. The electrode assembly of the pouch-type battery cell is embedded in a pouch case including an aluminum laminated sheet.

The electrode assembly includes a positive electrode, a negative electrode, and a separator interposed between the positive electrode and the negative electrode. A jelly roll-type electrode assembly is obtained by winding the positive electrode, the negative electrode, and the separator interposed therebetween. A stack-type electrode assembly includes a plurality of positive electrodes, and a plurality of negative electrodes that are sequentially stacked, and a plurality of separators interposed therebetween.

According to the embodiment, the plurality of battery cells 121 may constitute a plurality of banks. The plurality of banks may include one or more battery cells 121 that are connected in parallel. The plurality of banks may be connected in series with each other. The number of the battery cells 121 included in each of the plurality of banks and the number of the banks connected in series with each other may be determined based on the voltage and current, which are to be output through each of the plurality of battery cell assemblies 120.

According to the embodiment, a cell stack may further include a plurality of separators 122. The plurality of separators 122 may support a plurality of the battery cells 121 horizontally, thereby preventing swelling of the plurality of battery cells. According to an embodiment, the plurality of separators 122 may be thermal barriers. According to an embodiment, each of the plurality of separators 122 may have a high melting temperature and low thermal conductivity. According to an embodiment, each of the plurality of separators 122 may include a flame-retardant material, such as ceramic and coated glass materials. According to the embodiment, the plurality of separators 122 may be configured to release a fire retarding material and a fire extinguishing agent when a thermal runaway event occurs.

The center beam 131 may be surrounded by the sidewalls 110S. Accordingly, the center beam 131 may divide a space defined by the pack housing 110. The center beam 131 may be included in one of the plurality of plates of the base plate 110B and may be formed by an extrusion process together with one of the plurality of plates, or may be welded to one of the plurality of plates of the base plate 110B.

The center beam 131 may extend along the X-direction. The center beam 131 may isolate the battery cell assemblies 120 in the Y-direction. The center beam 131 may be interposed between the battery cell assemblies 120.

The cross-beams 133 may extend along the Y-direction. The cross-beams 133 may isolate the plurality of battery cell assemblies 120 in the X-direction. The cross-beams 133 may be interposed between the battery cell assemblies 120, or between the battery cell assemblies 120 and the sidewalls 110S, in the X-direction. The cross-beams 133 may be interposed between the sidewalls 110S and the center beam 131 in the Y-direction.

The exhaust units 140 may be coupled to any one of the sidewalls 110S. The sidewalls 110S coupled to the exhaust units 140 may include an exhaust pathway connected to the exhaust units 140. The exhaust units 140 may be configured to delay thermal propagation by releasing high temperature gases within the battery pack 100 to the outside, when at least one of the plurality of battery cell assemblies 120 is in a thermal runway condition.

Here, the thermal runaway of the plurality of battery cell assemblies 120 is a state where a temperature change in the plurality of battery cell assemblies 120 further accelerates the change in temperature of the plurality of battery cell assemblies 120, which is an uncontrollable positive feedback. The plurality of battery cell assemblies 120 in this thermal runaway state, exhibit a rapid increase in temperature, and discharge large amounts of high-pressure gases and combustion remains (e.g., combustion debris).

The lead 160 may be coupled to the sidewalls 110S. The lead 160 may cover the elements disposed within the battery pack 100, such as the battery cell assemblies 120 and electric components. The lead 160 may be fixed to the battery pack 100 by a mechanical coupling means, such as a bolt, for example.

The reinforcing brackets 150 may extend in the X-direction. Each of the reinforcing brackets 150 may overlap with the plurality of battery cell assemblies 120 in the Z-direction. In this example, each of the reinforcing brackets 150 may overlap, in the Z-direction, with each of the battery cell assemblies 120 arranged in an extension direction (e.g., the X-direction) of each of the reinforcing brackets 150. In FIG. 1, each of the reinforcing brackets 150 overlaps with three battery cell assemblies 120, but this is only for illustrative purposes and does not limit the technical idea of the present disclosure in any sense. A person having ordinary skill in the art will readily understand an embodiment in which each of the reinforcing brackets 150 overlaps with two or four or more battery cell assemblies 120, based on the description provided herein.

According to the embodiment, each of the reinforcing brackets 150 may overlap with the plurality of cross-beams 133 in the Z-direction. According to an embodiment, the reinforcing brackets 150 may be coupled to the cross-beams 130. In an example, the reinforcing brackets 150 may be coupled to the cross-beams 133 arranged in the extension direction (e.g., X-direction) of each of the reinforcing brackets 150. In FIG. 1, each of the reinforcing brackets 150 is coupled to the four cross-beams 133, but this is only for illustrative purposes and does not limit the technical idea of the present disclosure in any sense. A person having ordinary skill in the art would readily understand an embodiment in which each of the reinforcing brackets 150 is coupled to two or four or more cross-beams, based on the description provided herein.

The reinforcing brackets 150 may be coupled to each of the cross-beams 133 arranged in the X-direction by the fixing units 170. The fixing units 170 may be mechanical fixing units, such as bolts, for example. The fixing units 170 may fix the lead 160, in addition to the reinforcing brackets 150, to the cross-beams 133.

Each of the reinforcing brackets 150 may include a base 151, raised portions 155, and connection portions 153. Each of the reinforcing brackets 150 may include a corrugated structure CGS in the Y-direction. The base 151, the raised portions 155, and the connection portions 153 of each of the reinforcing brackets 150 may be repeated to form a corrugated structure CGS. The base 151, the raised portions 155, and the connection portions 153 may be provided in the Y-direction. When the reinforcing brackets 150 include the corrugated structure CGS in the Y-direction, positions in the Z-direction of the respective portions of the reinforcing brackets 150 vary in a corrugated manner depending on positions thereof in the Y-direction.

The raised portions 155 may be raised upwardly from the base 151. A distance between each of the raised portions 155 and the base plate 110B may be different from a distance between the base 151 and the base plate 110B. The distance between each of the raised portions 155 and the base plate 110B may be greater than the distance between the base 151 and the base plate 110B.

The connection portions 153 may connect the base 151 and the raised portions 155. Each of the base 151 and the raised portions 155 may be substantially parallel to the mounting surface 110M of the base plate 110B. Each of the connection portions 153 may include one of an inclined surface and a curved surface. Each of the connection portions 153 may be formed, for example, at an angle to the mounting surface 110M of the base plate 110B.

The lead 160 may include a base 161, raised portions 165, and connection portions 163. The base 161, the raised portions 165, and the connection portions 163 may be arranged in the Y-direction. The lead 160 may further include additional raised portions and connection portions, in addition to the raised portions 165 and the connection portions 163 that overlap with the reinforcing brackets 150.

Each of the raised portions 165 may be raised upwardly from the base 161. Due to the structure, the distance between the base plate 110B and each of the raised portions 165 may be different from the distance between the base 161 and the base plate 110B. The distance between the base plate 110B and each of the raised portions 165 may be greater than the distance between the base 161 and the base plate 110B.

The connection portions 163 may connect the base 161 and the raised portions 165. Each of the base 161 and the raised portions 165 may be substantially parallel to the mounting surface 110M of the base plate 110B. Each of the connection portions 163 may include one of an inclined surface and a curved surface. Each of the connection portions 163 may be formed, for example, at an angle to the mounting surface 110M of the base plate 110B.

The base 151 may overlap with the base 161 in the Z-direction. The base 151 may abut the base 161. The base 151 may be welded to the base 161. Accordingly, the first welded portions WP1 may be provided on the base 151 and the base 161. The first welded portions WP1 may be formed, for example, by a spot welding.

The raised portions 155 may overlap with the raised portion 165 in the Z-direction. According to an embodiment, a plurality (e.g., two or more) of raised portions 155 may overlap with the raised portion 165 in the Z-direction. The raised portions 155 may abut the raised portion 165. The raised portions 155 may be welded to the raised portion 165. Accordingly, the second welded portions WP2 may be provided on the raised portions 155 and the raised portion 165. The second welded portions WP2 may be formed, for example, by a spot welding.

According to the embodiment, the reinforcing brackets 150 may be coupled to the cross-beams 133 and may also be coupled to the lead 160. The reinforcing brackets 150 may reinforce the rigidity of the lead 160 and may provide structures that resist uniform surface pressure in each of a top portion and a bottom portion of the battery cell assembly 120 when a swelling of the plurality of battery cells 121 occurs. More specifically, the base plate 110B having a high mechanical rigidity may be provided under the battery cell assembly 120, and a coupling structure of the reinforcing brackets 150 and the lead 160 may be provided on the top portion of the battery cell assembly 120. Accordingly, it is possible to prevent damage to the lead 160 when a swelling of the plurality of battery cells 121 occurs, and it is possible to uniformize the pressure distribution around the battery cell assembly 120.

The battery pack 100 may further include inter-bus bars. The plurality of battery cell assemblies 120 may be connected in series by the inter-bus bars, and, as a result, the battery pack 100 may output a high voltage.

The battery pack 100 may further include electric components. The electric components may be disposed on the pack housing 110. The electric components may be disposed between one of the sidewalls 110S on which the exhaust units 140 are mounted and the plurality of battery cell assemblies 120.

The electric components may include, for example, a battery management system (BMS). The BMS may be configured to perform a monitoring operation, a balancing operation, and a control operation of the battery pack 100. The monitoring operation of the battery pack 100 may include measuring a voltage and a current at specific nodes within the plurality of battery cell assemblies 120 and measuring a temperature at the set locations within the battery pack 100. The battery pack 100 may include sensors to measure the voltage, current, and temperature described above.

The balancing operation of the battery pack 100 is an operation to reduce a deviation between the plurality of battery cell assemblies 120. The control operation of the battery pack 100 includes preventing an overcharge, an over-discharge, and an overcurrent from occurring. Through the monitoring operation, the balancing operation, and the control operation, the battery pack 100 may operate under optimal conditions, thereby preventing shortening of the lifespan of each of the plurality of battery cell assemblies 120.

The electric components may further include a cooling device, a power relay assembly (PRA), and a safety plug. The cooling device may include a cooling fan. The cooling fan may circulate air within the battery pack 100, thereby preventing overheating of each of the plurality of battery cell assemblies 120. The PRA may be configured to supply or disconnect the power from a high-voltage battery to an external load (e.g., a motor of a vehicle). The PRA may protect the plurality of battery cell assemblies 120 and the external load (e.g., the motor of the vehicle) by disconnecting the power supply to the external load (e.g., the motor of the vehicle), when an abnormal voltage, such as a voltage surge, occurs.

### (Second Embodiment)

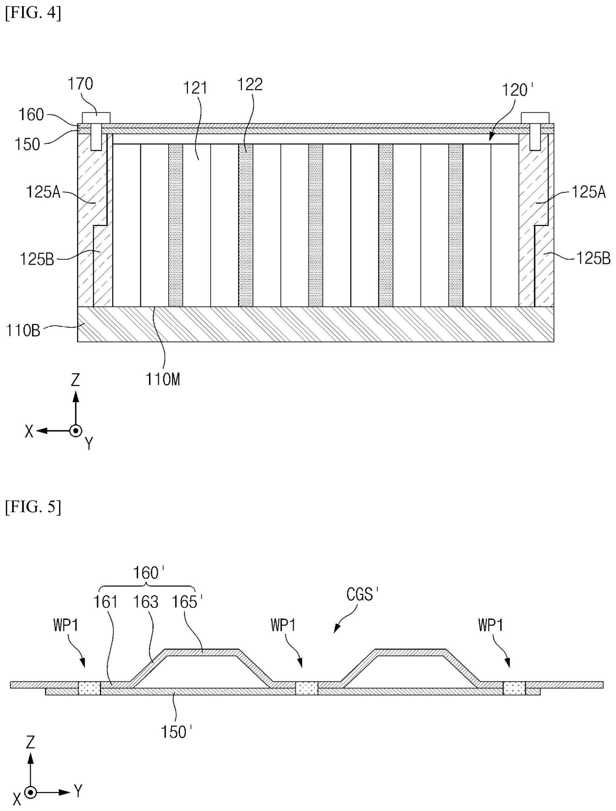

FIG. 4 is a cross-sectional view illustrating a battery cell assembly 120' according to another embodiment of the present disclosure.

Referring to FIG. 4, the battery cell assembly 120' may include the plurality of battery cells 121, the separators 122, and first and second cross-beams 125A and 125B. In FIG. 4, the battery cells 121, the separators 122, the base plate 110B, the reinforcing brackets 150, the lead 160, and the fixing units 170 are substantially the same as those described with reference to FIGS. 1 to 3, and thus, redundant descriptions thereof will be omitted.

The first and second cross-beams 125A and 125B may be spaced apart with the plurality of battery cells 121 interposed therebetween. The first and second cross-beams 125A and 125B may be coupled to the plurality of battery cells 121 using, for example, adhesive or other means. The first cross-beam 125A and the second cross-beam 125B may have shapes that are different from and complementary to each other. Accordingly, the first cross-beam 125A of each of the battery cell assemblies 120' may be coupled to the second cross-beam 125B of the preceding battery cell assembly 120', and the second cross-beam 125B of each of the battery cell assemblies 120' may be coupled to the first cross-beam 125A of the succeeding battery cell assembly 120'. Between the first and second cross-beams 125A and 125B that are coupled to each other, there may be a clearance, which takes into account manufacturing tolerances.

Each of the plurality of battery cell assemblies 120 in FIGS. 1 and 2 may be replaced by the battery cell assembly 120', and the cross-beams 133 may be omitted. Accordingly, the reinforcing brackets 150 may be coupled to the first and second cross-beams 125A and 125B of the battery cell assembly 120' by the fixing units 170.

### (Third Embodiment)

FIG. 5 is a cross-sectional view in the Y-direction of a reinforcing bracket 150', together with a lead 160'.

Referring to FIG. 5, the reinforcing bracket 150' may be substantially flat. The reinforcing bracket 150' may have a flat plate shape. The reinforcing bracket 150' may not include a corrugated structure. The reinforcing bracket 150' may replace the reinforcing bracket 150 in FIG. 3.

In this example, the shape of the lead 160' may also be changed as the shape of the reinforcing bracket 150' changes. More specifically, the lead 160' may include a corrugated structure CGS' that overlaps with the reinforcing bracket 150'. A base 161', raised portions 165', and the connection portions 163 may be repeated to form a corrugated structure CGS'. The base 161', the raised portions 165', and the connection portions 153 may be arranged in the Y-direction. The lead 160' may include an increased number of the raised portions 165' and the connection portions 153, compared to the lead 160 of FIG. 3. The reinforcing bracket 150' may overlap with two or more raised portions 165' in the Z-direction.

According to the embodiment, the reinforcing bracket 150' has a flat plate shape, so that the reinforcing bracket 150' may be spaced apart from the raised portions 165' of the lead 160'.

The reinforcing bracket 150' may be coupled to the base 161' of the lead 160', for example, by a spot welding. First welded portions PW1 may be provided on the reinforcing bracket 150' and the base 161' of the lead 160'.

### (Fourth Embodiment)

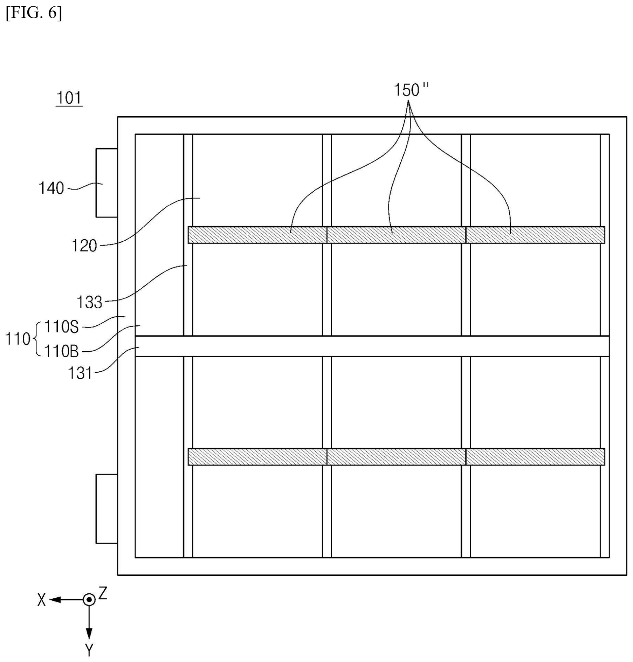

FIG. 6 is a plan view of a battery pack 101 according to yet another embodiment of the present disclosure.

The battery pack 101 may include the pack housing 110, the plurality of battery cell assemblies 120, the center beam 131, cross-beams 133, the exhaust units 140, reinforcing brackets 150", the lead 160, and the fixing units 170. The battery pack 101 is a final form of a battery system to be mounted on a mobility device.

Each of the reinforcing brackets 150" is substantially the same as the reinforcing brackets 150 described with reference to FIGS. 1 to 3, except for the length in the X-direction and the corresponding coupling with the cross-beams 133.

In this example, the reinforcing brackets 150" may have a reduced length compared to the reinforcing brackets 150 of FIG. 1. Each of the three reinforcing brackets 150" may overlap with a corresponding one of the plurality of battery cell assemblies 120 in the Z-direction. Each of the three reinforcing brackets 150" according to the embodiment may be coupled to two adjacent cross-beams 133. In FIG. 6, four cross-beams 133 are arranged in the X-direction, and each of the three reinforcing brackets 150" may be coupled to two adjacent cross-beams 133 among the four cross-beams 133.

The present disclosure has been described in more detail through the drawings and embodiments. However, the configurations described in the drawings or embodiments described in this specification are only provided as an example of the present disclosure and do not represent all the technical ideas of the present disclosure. Therefore, it should be understood that there may be various equivalents and modifications that could replace them at the time of filing this application.

## Claims

1. A battery pack comprising:
a pack housing including a base plate and sidewalls;
first and second cross-beams disposed on the pack housing, and spaced apart in a first direction parallel to a mounting surface of the base plate and extending in a second direction parallel to the mounting surface of the base plate;
a battery cell assembly interposed between the first and second cross-beams;
a lead coupled to the sidewalls and covering the battery cell assembly; and
a reinforcing bracket coupled to the lead and extending along the first direction.

2. The battery pack according to claim 1, wherein the reinforcing bracket is coupled to the lead by a spot welding.

3. The battery pack according to claim 1, wherein the reinforcing bracket is coupled to the first and second cross-beams.

4. The battery pack according to claim 1, wherein the reinforcing bracket has a flat plate shape.

5. The battery pack according to claim 1, wherein the reinforcing bracket includes a corrugated structure.

6. The battery pack according to claim 1, wherein the lead includes a first base and a first raised portion that is farther from the base plate than the first base.

7. The battery pack according to claim 6, wherein the reinforcing bracket includes a second base and second raised portions that are farther from the base plate than the second base.

8. The battery pack according to claim 7, wherein the second raised portions overlap with the first raised portion in a third direction perpendicular to the mounting surface of the base plate.

9. The battery pack according to claim 8, wherein two or more of the second raised portions overlap with one of the second raised portions in the third direction.

10. The battery pack according to claim 7, wherein the second raised portions are welded to the first raised portion.

11. The battery pack according to claim 7, wherein the second base is welded to the first base.

12. The battery pack according to claim 7, wherein the reinforcing bracket is welded to the first base of the lead and is spaced apart from the first raised portion.

13. The battery pack according to claim 12, wherein the lead includes a corrugated structure that overlaps with the reinforcing bracket.

14. A battery pack comprising:
a pack housing including a base plate and sidewalls;
a battery cell assembly disposed on the pack housing and including a plurality of battery cells, first and second cross-beams being spaced apart in a first direction with the plurality of battery cells interposed therebetween;
a lead coupled to the sidewalls; and
a reinforcing bracket extending in the first direction and welded to the lead.

15. The battery pack according to claim 14, wherein the reinforcing bracket is coupled to the first and second cross-beams.
